(19) **Europäisches Patentamt / European Patent Office / Office européen des brevets**

(11) **EP 4 768 633 A1**

(12) **EUROPEAN PATENT APPLICATION**
published in accordance with Art. 153(4) EPC

(43) Date of publication:
01.07.2026 Bulletin 2026/27

(21) Application number: 24855871.0

(22) Date of filing: 22.08.2024

(51) International Patent Classification (IPC):
$C25B\ 13/08$ (2006.01)  $B32B\ 27/12$ (2006.01)
$B32B\ 27/20$ (2006.01)  $C25B\ 1/04$ (2021.01)

(52) Cooperative Patent Classification (CPC):
B32B 27/12; B32B 27/20; C25B 1/04; C25B 13/08

(86) International application number:
PCT/CN2024/113883

(87) International publication number:
WO 2025/040149 (27.02.2025 Gazette 2025/09)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 23.08.2023 CN 202311065032

(71) Applicant: Toray Industries, Inc.
Tokyo 103-8666 (JP)

(72) Inventors:
• GAO, Dongyan
  Nantong, Jiangsu 226009 (CN)
• LIU, Tongjuan
  Nantong, Jiangsu 226009 (CN)
• ZHANG, Dongbo
  Nantong, Jiangsu 226009 (CN)

(74) Representative: Mewburn Ellis LLP
Aurora Building
Counterslip
Bristol BS1 6BX (GB)

(54) **COMPOSITE MEMBRANE FOR WATER ELECTROLYSIS CELL**

(57) The present invention discloses a composite diaphragm for a water electrolyzer, the composite diaphragm invention includes a nonwoven fabric and a polymer resin, the polymer resin is present on one surface or both surfaces of the nonwoven fabric, and the structure of the nonwoven fabric is penetrated by a part or all of the polymer resin, and the nonwoven fabric has a weight ratio of 20 to 95% in the composite diaphragm, a thickness of 0.20 to 2.00 mm, a basis weight of 100 to 400 $g/m^2$, and a density of 0.20 to 0.50 $g/cm^3$. The composite diaphragm for a water electrolyzer according to the present invention has features of being high in airtightness, low in electrical resistance, and high in durability in use in an alkaline solution environment.

EP 4 768 633 A1

## Description

TECHNICAL FIELD

The present invention relates to a composite diaphragm for a water electrolyzer.

BACKGROUND ART

The diaphragm is a core material of an alkaline water electrolyzer type hydrogen production device, and is placed between an anode and a cathode of the water electrolyzer. The placement of the diaphragm prevents hydrogen generated on the cathode side and oxygen generated on the anode side from being mixed with each other, and ensures rapid transmission of ions through the diaphragm, thereby improving the electrolysis efficiency.

In the current market, there are mainly two types of diaphragms. One of the two is a polyphenylene sulfide woven fabric diaphragm (abbreviated as a woven fabric diaphragm), and the other is a composite diaphragm formed by combining a porous support material and a polymer resin (abbreviated as composite diaphragm).

The woven fabric diaphragm is composed of only a woven fabric made by interweaving polyphenylene sulfide (PPS) yarns. In the process of actual use, the woven fabric is pressed from the both polar plates of the water electrolyzer for a long period of time and subjected to impact in ion transmission, and thus, the woven fabric is gradually deformed, the pore size is increased, and as a result, the airtightness of the woven fabric diaphragm is decreased. Typically, for imparting certain mechanical strength to the woven fabric to make the woven fabric less likely to be deformed, the thickness of the woven fabric is increased to 0.7 mm or more, but this increased thickness increases the electrical resistance of the woven fabric diaphragm.

For the problem of the low airtightness of the woven fabric diaphragm, engineers have researched and developed composite diaphragms formed by combining a porous support material and a polymer resin. For example, Patent Document 1 (CN 110869538 A) discloses a reinforced diaphragm for alkali decomposition. Specifically, a polymer resin containing inorganic particles is applied to a porous support material of 100 to 1000 $\mu$m in pore size, and then, a porous composite diaphragm is formed by a phase conversion method. While the composite diaphragm has high initial airtightness, the porous support material is large in pore size, and the area of contact with the resin layer is thus small, and in the process of long-term use under an alkaline solution environment, the resin layer is easily peeled off, and as a result, the airtightness of the composite diaphragm after use is decreased.

Patent Document 2 (Japanese Patent Laid-open Publication No. 2020-007574) discloses a diaphragm for alkaline water electrolysis. The diaphragm is composed of a nonwoven fabric support and a polymer resin layer, and the nonwoven fabric support has certain basis weight and thickness. However, because the nonwoven fabric is low in whole basis weight, the strength of the obtained composite diaphragm also tends to be low. In addition, because of the relatively small thickness of the nonwoven fabric and of the relatively dense structure, the applied resin has a reduced amount of permeation, thereby reducing the area of contact between the nonwoven fabric fibers and the resin layer. As a result, the resin layer is easily peeled off in the process of long-term use under an alkaline solution environment, and the airtightness of the composite diaphragm is decreased.

PRIOR ART DOCUMENTS

PATENT DOCUMENTS

Patent Document 1: CN 110869538 A
Patent Document 2: Japanese Patent Laid-open Publication No. 2020-007574

SUMMARY OF THE INVENTION

PROBLEMS TO BE SOLVED BY THE INVENTION

An object of the present invention is to provide a composite diaphragm for a water electrolyzer, which is high in airtightness, low in electrical resistance, and high in service durability under an alkaline solution environment.

SOLUTIONS TO THE PROBLEMS

A composite diaphragm for a water electrolyzer according to the present invention includes a nonwoven fabric and a polymer resin, the polymer resin is present on one surface or both surfaces of the nonwoven fabric, and the structure of the nonwoven fabric is penetrated by a part or all of the polymer resin, and the nonwoven fabric has a weight ratio of 20 to 95% in the composite diaphragm, a thickness of 0.20 to 2.00 mm, a basis weight of 100 to 400 $g/m^2$, and a density of 0.20 to 0.50 $g/cm^3$.

## EFFECTS OF THE INVENTION

The composite diaphragm for a water electrolyzer according to the present invention has advantages of being high in airtightness, low in electrical resistance, and high in service durability under an alkaline solution environment.

## EMBODIMENTS OF THE INVENTION

A composite diaphragm for a water electrolyzer according to the present invention includes a nonwoven fabric and a polymer resin, the polymer resin is present on one surface or both surfaces of the nonwoven fabric, and the structure of the nonwoven fabric is penetrated by a part or all of the polymer resin, and the nonwoven fabric has a weight ratio of 20 to 95% in the composite diaphragm, a thickness of 0.20 to 2.00 mm, a basis weight of 100 to 400 $g/m^2$, and a density of 0.20 to 0.50 $g/cm^3$.

The composite diaphragm according to the present invention is obtained by using a composite technique of a nonwoven fabric and a polymer resin, has an advantage of having a more stable structure, higher airtightness, and a longer service life, and has solved problems of a simple nonwoven fabric diaphragm: low airtightness; and insufficient service durability.

The nonwoven fabric in the composite diaphragm according to the present invention is preferably a hydroentangled nonwoven fabric, a needlepunched nonwoven fabric, a wetlaid nonwoven fabric, a hot air nonwoven fabric, or a spunbonded nonwoven fabric. These nonwoven fabrics have good denseness and appropriate surface roughness, and thus, the polymer resin easily penetrates the structure of the nonwoven fabric, and improves the adhesive strength between the resin and the nonwoven fabric fiber. Therefore, these nonwoven fabrics are suitable options.

The nonwoven fabric in the composite diaphragm according to the present invention is most preferably a hydroentangled nonwoven fabric, thereby providing a composite diaphragm that has high airtightness, low electrical resistance, and excellent service durability under an alkaline solution environment. When a needlepunched nonwoven fabric is used, the thick needle strengthens the entanglement between fibers, but because the nonwoven fabric has a large pore size and high surface roughness, the resin tends to be easily peeled off when the obtained composite diaphragm is used in an alkaline solution for a long period of time, and thus, the needlepunched nonwoven is not the most preferable option. When a wetlaid nonwoven fabric is used, because of the low strength and dense surface of the nonwoven fabric, the area of contact between the resin and the fiber is small, thereby making the resin layer less likely to permeate, and the resin tends to be easily peeled off when the obtained composite diaphragm is used for a long period of time in an alkaline solution, and thus, the wetlaid nonwoven fabric is not the most preferable option.

The polymer resin in the composite diaphragm according to the present invention is preferably at least one of a polysulfone, a polyether sulfone, a polyphenyl sulfone, a polyvinylidene fluoride, a polycarbonate, a polytetrafluoroethylene, a polypropylene, a polyphenylene sulfide, a polyketone, polyetheretherketone, a polyimide, and a polyetherimide. Polysulfones, polyether sulfones, and polyphenyl sulfones contain, in the structures thereof, no ester group, amide group, or the like, which is likely to be decomposed, thus have high chemical stability, and can exhibit excellent durability even in an alkaline solution at a high temperature and a high concentration, and thus, are more preferable options. In consideration of cost, the polymer resin is most preferably a polysulfone.

The composite diaphragm according to the present invention preferably contains hydrophilic inorganic particles. The hydrophilic inorganic particles are preferably at least one of an oxide or a hydroxide of zirconium, bismuth, or cerium. The hydrophilic inorganic particles can not only improve the hydrophilicity of the composite diaphragm, but also increase the ion permeability and reduce the electrical resistance, and thus reduce the operating voltage and cost of the hydrogen production device. Considering that both the chemical properties and structure of the surface of a zirconium oxide affect the hydrophilicity of the composite diaphragm, the hydrophilic inorganic particles according to the present invention are more preferably a zirconium oxide.

In the composite diaphragm according to the present invention, the weight ratio between the polymer resin and the hydrophilic inorganic particles is preferably 1 : 0.5 to 3.5, and more preferably 1 : 1 to 3. If the proportion of the hydrophilic inorganic particles is excessively high, the content of the hydrophilic inorganic particles in the composite diaphragm is increased, thus decreasing the adhesiveness between the polymer resin and the nonwoven fabric, and making the hydrophilic inorganic particles likely to fall off. Thus, the airtightness of the composite diaphragm is decreased with the decreased weight of the composite diaphragm, furthermore, the increased weight loss rate of the composite diaphragm after 6 months, and in addition, the non-uniformly falling hydrophilic inorganic particles. On the other hand, if the proportion of the hydrophilic inorganic particles is excessively low, the hydrophilicity of the composite diaphragm is decreased, thereby increasing the electrical resistance, and as a result, the voltage is increased at the time of operating the hydrogen production device, thereby increasing the operation cost.

In the composite diaphragm according to the present invention, the nonwoven fabric has a weight ratio of 20 to 95% in the composite diaphragm. If the proportion of the nonwoven fabric is less than 20%, the excessively high content of the polymer resin not only increases the electrical resistance of the composite diaphragm, but also decreases the area of contact between the resin and the nonwoven fabric fiber, and in the process of use under an alkaline solution environment, the powder on the resin surface gradually falls off, and over time and by the action of the differential pressure in the electrode chamber, the polymer resin layer is peeled off all together due to slight entanglement of the nonwoven fabric, thereby instantaneously decreasing the airtightness of the composite diaphragm, and significantly decreasing the breaking strength. If the proportion of the nonwoven fabric is more than 95%, the excessively low content of the polymer resin results in failing to achieve the reinforcing action, and due to the still low initial airtightness of the composite diaphragm and the small area of contact between the small amount of resin and the nonwoven fabric fiber, after long-term use under an alkaline solution environment, the small amount of resin is likely to be peeled off, thereby further decreasing the airtightness of the composite diaphragm. For obtaining a composite diaphragm that has high airtightness, low electrical resistance, and high service durability under an alkaline solution environment, the nonwoven fabric has a weight ratio of preferably 40 to 80%, more preferably 55 to 65% in the composite diaphragm.

The nonwoven fabric in the composite diaphragm according to the present invention has a thickness of 0.20 to 2.00 mm, a basis weight of 100 to 400 g/m$^2$, and a density of the nonwoven fabric (ratio of the basis weight of the nonwoven fabric to the thickness) of 0.20 to 0.50 g/cm$^3$, which is at the same level as that of the nonwoven gray fabric. In the present invention, controlling the thickness of the nonwoven fabric to be 0.20 to 2.00 mm, the basis weight to be 100 to 400 g/m$^2$, and the density (the ratio of the basis weight to the thickness of the nonwoven fabric) to be in the range of 0.20 to 0.50 g/cm$^3$, excludes, from the scope of the present invention, a thick bulky nonwoven fabric that has a large thickness and a small basis weight but falls below the density requirement and a thin dense nonwoven fabric that has a small thickness and a large basis weight but exceeds the density requirement. This is because these nonwoven fabrics fail to achieve the beneficial effects of the present invention. If the density of the nonwoven fabric is excessively small and less than 0.20 g/cm$^3$ while the nonwoven fabric has a thickness of 0.20 to 2.00 mm and a basis weight of 100 to 400 g/m$^2$, the sparse structure of the nonwoven fabric results in a small number of fibers per unit volume, and the weak entanglement force between the fibers results in low breaking strength, and even if the polymer resin has a large amount of penetration, insufficient contact with the sparse fibers causes, when the composite diaphragm is used under an alkaline solution environment for a long period of time, the resin to tend to be easily peeled off, thereby decreasing the durability. On the other hand, if the density is excessively high and more than 0.50 g/cm$^3$, the excessively dense structure of the nonwoven fabric not only increases the electrical resistance, but also makes the resin less likely to penetrate, reduces the area of contact with the fiber, and decreases the adhesion, and thus, when the composite diaphragm is used under an alkaline solution environment for a long period of time, the resin tends to be easily peeled off. In comprehensive consideration of the airtightness, electrical resistance, and durability of the composite diaphragm, the nonwoven fabric according to the present invention preferably has a thickness of 0.30 to 0.50 mm, a basis weight of 120 to 300 g/m$^2$, and a density of 0.30 to 0.40 g/cm$^3$.

The polymer resin in the present invention is present on one surface or both surfaces of the nonwoven fabric, and the structure of the nonwoven fabric is penetrated by a part or all of the polymer resin penetrates. The penetration thickness of the polymer resin is affected not only by the void distribution of the nonwoven fabric itself but also by the viscosity of the polymer resin and the process of applying the polymer resin. Specifically, the present invention can employ a method in which a surface of a nonwoven fabric is coated with a polymer resin by a single-sided or double-sided coating method to cause the polymer resin to further penetrate from the surface to the inside to a range of 1/10 or more of the thickness, and it is preferable to cause the polymer resin to penetrate to a range of 1/3 or more of the thickness from the surface to the inside. When a low-viscosity polymer resin is selected, the resin has high fluidity, thus allowing the entire resin to penetrate the structure of the nonwoven fabric. When a high-viscosity polymer resin is selected, process control allows the resin to be present on one surface or both surfaces of the nonwoven fabric, and allows a part of the resin to penetrate the structure of the nonwoven fabric. In addition, the present invention can also employ a method of causing a resin to penetrate through the entire structure of a nonwoven fabric by a dip rolling method, that is, making the resin present on both surfaces of the nonwoven fabric and making the structure of the nonwoven fabric penetrated by the entire resin.

In the composite diaphragm according to the present invention, the surface roughness of the nonwoven fabric is preferably 150 to 800 $\mu$m. The surface roughness of the nonwoven fabric in the composite diaphragm is at the same level as that of the nonwoven gray fabric. The surface roughness affects the bonding robustness between the nonwoven fabric and the polymer resin, and further affects the durability of the composite diaphragm. If the surface roughness is excessively high, the surface of the nonwoven fabric has irregularities, and many protruding fibers are exposed from the surface of the resin layer after the resin is applied, and thus, no coating layer can be continuously formed on the surface layer of the nonwoven fabric. In the case of using the composite diaphragm, the fibers exposed from the surface of the resin layer fall off on the one hand, whereas the interaction force is insufficient between the discontinuous resin layers on the other hand, and when the composite diaphragm is used in an alkaline solution for a long period of time, the risk of peeling the resin coating film is increased, which is not preferable. If the surface roughness is excessively low, the surface of the nonwoven fabric is excessively flat, and the interfacial action force between the resin layer and the nonwoven fabric layer is decreased after the resin is applied, and when the composite diaphragm is used in an alkaline solution for a long period of time, the risk of peeling off the resin coating layer is also increased, which is not preferable. In the composite diaphragm according to the present invention, the surface roughness of the nonwoven fabric is more preferably 200 to 500 μm.

There are many factors that affect the surface roughness, and as listed below, the first is a method for processing the nonwoven fabric, the second is the fineness of nonwoven fabric fibers, and the third is a method for post-processing the nonwoven fabric. When the processing method is needle punching, the thick needle strengthens the entanglement between fibers, but the needlepunched nonwoven fabric has a large pore size, and also has a high surface roughness. As the fineness of the nonwoven fabric fibers is reduced, the entanglement between the fibers becomes denser, and the structure of the obtained nonwoven gray fabric also becomes denser, and thus, the surface roughness is also reduced. In the case of employing calendering as the method for post-processing the nonwoven fabric, the surface of the nonwoven fabric becomes flat and the surface roughness is reduced. The surface roughness in the present invention is not limited by the affecting factors, and any surface roughness controlled within the range of 150 to 800 μm is considered belonging to the scope of protection of the present invention.

In the composite diaphragm according to the present invention, the nonwoven fabric preferably has an average pore size of 8.0 to 18.0 μm, and the proportion of pores of 18 μm or less in pore size is preferably 40% or more in the nonwoven fabric. The average pore size of the nonwoven fabric in the composite diaphragm is at the same level as that of the nonwoven gray fabric. If the average pore size is excessively small, the polymer resin is less likely to penetrate into the nonwoven fabric, and the coating layer is formed only on the outermost surface of the nonwoven fabric, thereby leading to a small amount of penetration from the surface of the nonwoven fabric to the inside thereof. As a result, the area of contact between the resin and the nonwoven fabric fiber is very small, and when the composite diaphragm is used in an alkaline solution for a long period of time, the resin is made likely to be peeled off. If the average pore size is excessively large, the nonwoven fabric has a sparse structure, and the airtightness and strength of the nonwoven fabric are decreased on the one hand, whereas the area of contact between the nonwoven fabric and the resin is reduced on the other hand, thereby decreasing the adhesive strength of the resin layer. In consideration of the durability and airtightness of the composite diaphragm, the nonwoven fabric according to the present invention more preferably has an average pore size of 10.0 to 16.0 μm, and the proportion of pores of 18 μm or less in pore size is more preferably 50% or more in the nonwoven fabric.

There are many factors that affect the average pore size, and examples of the factors include the fineness of fibers. As the fibers become thinner, the entanglement between the fibers becomes denser, and the voids become smaller, and thus, the obtained nonwoven fabric is small and uniform in pore size. In addition, the uniformity of the fiber network is also one of the affecting factors. Adjusting the process for processing, including the velocity ratio between a cylinder and a doffer, makes the fiber network more uniform, thereby allowing the pore size uniformity of the nonwoven fabric to be improved. The average pore size in the present invention is not limited by the affecting factors, and any pore size controlled within the range of 8.0 to 18.0 μm is considered belonging to the scope of protection of the present invention.

The composite diaphragm according to the present invention preferably has an average pore size of 0.1 to 5.0 μm, preferably has an area-specific resistance of 200 mΩ·cm$^2$ or less, and preferably has a porosity of 50 to 80%, and as for airtightness, no air bubbles are preferably generated within 2 minutes under a 700 mm water column. If the pore size is excessively large, the airtightness is decreased, and the electrolysis efficiency is also decreased. If the pore size is excessively small, the area-specific resistance is increased, and the energy consumption at the time of water electrolysis is also increased. If the area-specific resistance is excessively high, the hydrogen production equipment operates at a constant current, and thus, the operating voltage is increased, thereby increasing the energy consumption of the hydrogen production equipment. The excessively low airtightness results in not only a decrease in purity of gas produced, but also a failure to meet the requirements for operating the high-pressure electrolyzer. Accordingly, the composite diaphragm according to the present invention more preferably has an average pore size of 0.30 to 2.0 μm, more preferably has an area-specific resistance of 100 mΩ·cm$^2$ or less, more preferably has a porosity of 60 to 70%, and more preferably has airtightness of 1000 mm H$_2$O or more.

In the electrolysis process, the electrolytic solution is circulated in the electrolyzer to generate gases from the anode and the cathode, and thus, a member such as the composite diaphragm vibrates in the electrolyzer. Due to long-term vibration in the electrolyzer and long-term immersion in a hot alkaline solution, there is a risk of leading to peeling off the resin layer, significantly decreasing the airtightness, and stopping the operation of the electrolyzer. Accordingly, the present invention ensures sufficient bonding between the nonwoven and the resin layer through the specific design and selection of the nonwoven fabric. After immersion in a 30% alkaline solution at 90°C for 6 months, the weight loss rate of the composite diaphragm is preferably 5.0% or less, and the retention ratio of the breaking strength is preferably 80% or more. For further ensuring the operation stability of the composite diaphragm, the weight loss rate of the composite diaphragm is more preferably 3.0% or less, and the retention rate of the breaking strength is more preferably 90% or more.

A method for producing the composite diaphragm for a water electrolyzer according to the present invention is as follows:

(1) Production of Nonwoven Gray Fabric: Heat-resistant short fibers of 5 to 20 μm in diameter are formed into a fiber network, and then subjected to reinforcement, drying, heat setting, and calendering to obtain a nonwoven gray fabric.

(2) Production of Polymer Resin: A resin liquid with a viscosity of 300 to 1,000,000 Pa·s is prepared by mixing 10 to 20 wt% of a polymer resin, 5 to 45 wt% of hydrophilic inorganic particles, 0.1 to 15 wt% of a pore forming agent, and a solvent. In the resin liquid, the weight ratio of the polymer resin to the hydrophilic inorganic particles is 1 : 0.5~3.5.

(3) Production of Composite Diaphragm: The prepared resin liquid is applied to one surface or both surfaces of the nonwoven gray fabric by a doctor blade method, a roll press method, or a slit coating method, or the nonwoven gray fabric is immersed in the resin liquid. Thereafter, the nonwoven gray fabric with the resin liquid adhering thereto is immersed in water or in a mixed liquid of water and an organic solvent for 10 to 30 minutes to form a polymer porous membrane. The obtained polymer porous membrane is further washed in a water bath 2 to 3 times to precipitate the solvent remaining in the porous membrane, and finally, a composite diaphragm product is obtained.

The diameters of the heat-resistant fibers in the procedure (1) are 5 to 20 μm. Under the same basis weight, as the fibers are thinner, the number of the fibers is increased, and in the case of thinner fibers, as compared with thicker fibers, the specific surface area of the fibers becomes larger, the entanglement between the fibers becomes denser, the average pore size of the obtained nonwoven gray fabric becomes smaller, the pore size distribution becomes more uniform, the area of contact with the resin is also increased, and the long-term durability at the time of use is further improved. In consideration of the airtightness and long-term durability of the composite diaphragm, the diameters of the heat-resistant fibers are preferably 8 to 12 μm.

Considering that the composite diaphragm according to the present invention is used at a high temperature of 90°C in a potassium hydroxide solution that has a concentration of 30% for a long period of time, polypropylene, polyphenylene sulfide, or polytetrafluoroethylene fibers are preferable as the heat-resistant fibers. In consideration of excellent heat resistance, chemical resistance, and stability, polyphenylene sulfide fibers are more preferable.

The nonwoven gray fabric in the procedure (1) is preferably obtained by hydrophilic treatment. The surface of the nonwoven fabric is treated by performing sulfonation processing in a mixed solution of a chromic acid and a sulfuric acid at a constant concentration, and then performing washing with water at ordinary temperature, washing with hot water, reduction cleaning, washing with ultrasonic water, drying, and calendering, or by a plasma method. In consideration of the durability of the composite diaphragm in an alkaline solution, sulfonation processing is more preferable as the hydrophilic treatment.

The area-specific resistance of the nonwoven gray fabric is preferably 200.0 mΩ·cm$^2$ or less. If the area-specific resistance is excessively high, the area-specific resistance of the nonwoven fabric with the resin applied thereto is also increased, and the hydrogen production device operates at a constant current, thereby causing the operating voltage to be increased, and the energy consumption of the hydrogen production device tends to be increased. The area-specific resistance is more preferably 100 mΩ·cm$^2$ or less.

As for the airtightness of the nonwoven gray fabric, no air bubbles are preferably generated within 2 minutes under the condition of a 400 mm water column, that is, the airtightness exceeds the 400 mm water column. If the nonwoven fabric has high airtightness, a diaphragm composite fabric with the resin applied thereto can also maintain high airtightness. Considering that the composite diaphragm has both excellent airtightness and ion permeability, the airtightness of the nonwoven gray fabric is more preferably equal to or more than a 500 mm water column.

The content of the polymer resin in the procedure (2) is 10 to 20 wt%. If the content of the resin is excessively high, the excessively high viscosity makes the application processing difficult, and also reduces the amount of the resin layer penetrating into the nonwoven fabric, thereby making it difficult to form a continuous resin layer, and thus, the durability of the composite diaphragm in a high-temperature alkaline solution tends to be decreased. On the other hand, if the content of the resin is excessively low, the viscosity is excessively low, and the adhesive strength between the resin and the nonwoven fabric tends to be decreased.

For improving the hydrophilicity, hydrophilic inorganic particles with polar surfaces are added into a polymer resin. The hydrophilic inorganic particles are not particularly limited, but are preferably an oxide of or a hydroxide of zirconium, bismuth, or cerium, which is excellent in stability, more preferably a zirconium dioxide. The concentration of the inorganic particles in the resin liquid is preferably 5 to 45 wt%, more preferably 10 to 30 wt%.

In addition, for improving the porosity of the polymer resin layer, it is preferable to add a watersoluble pore formation accelerator (that is, a pore-forming agent) at the time of preparing the polymer resin liquid. Examples of the pore-forming agent include a polyvinylpyrrolidone (PVP), a polyvinyl alcohol (PVA), a polyvinyl acetate (PVAC), and a glycerin. In the formation of the polymer resin layer in the subsequent coagulation bath, the pore-forming agent is dissolved in a non-solvent such as water, thereby forming fine pores. The concentration of the pore-forming agent directly affects the viscosity of the resin liquid, that is, the adhesive strength between the resin liquid and the nonwoven gray fabric. The concentration of the pore-forming agent in the resin liquid is preferably 0.1 to 15 wt%, more preferably 1 to 10 wt%.

EXAMPLES

The present invention will be further described with reference to the following examples, but the scope of protection of the present invention is not limited by the examples. The respective physical properties in the examples are measured by the following methods.

[Measurement of Nonwoven Fabric Single Body]

First, one composite diaphragm is collected and immersed in an N-methyl-2-pyrrolidone solvent for 12 hours or longer to completely dissolve the resin layer and leave only the nonwoven fabric single body (the nonwoven fabric single body is the nonwoven fabric in the composite diaphragm according to the present invention). Next, the nonwoven fabric single body is immersed in pure water for 2 minutes and then taken out, and dried in a thermostatic oven at 60°C for 2 hours, and thereafter, the physical properties of the nonwoven fabric single body for each item are measured.

[Method for Separating Nonwoven Fabric and Hydrophilic Inorganic Particles in Composite Diaphragm]

First, one composite diaphragm is collected and immersed in an N-methyl-2-pyrrolidone solvent for 12 hours or longer to completely dissolve the resin layer and to cause the hydrophilic inorganic particles to fall and precipitate. Next, the nonwoven fabric is taken out from the solution, then immersed in pure water for 2 minutes, and then taken out, the hydrophilic inorganic particles precipitated in the solution are filtered through filter paper and washed twice with pure water, and the both are dried in a thermostatic oven at 60°C for 2 hours to obtain a nonwoven fabric single body and a single body of hydrophilic inorganic particles.

[Weight Proportion of Nonwoven Fabric in Composite Diaphragm]

Samples of 20 cm × 20 cm are collected from three sites of left, middle, and right in the width direction of the composite diaphragm (N = 3), and the weights of the samples are respectively measured and denoted by $M_{left}$, $M_{middle}$, and $M_{right}$. The samples are dissolved, separated, and dried by the above-mentioned method for separation to obtain nonwoven fabric single bodies, and the weights thereof are measured, and denoted respectively by $M1_{left}$, $M1_{middle}$, and $M1_{right}$. As an arbitrary sample, the weight proportion of the nonwoven fabric in the composite diaphragm is calculated by the following formula: weight proportion of nonwoven fabric = $M1/M \times 100\%$. The weight ratios of the left, middle, and right parts are each calculated, and then the average value thereof is calculated.

[Confirmation of Presence or Absence of Hydrophilic Inorganic Particles in Composite Diaphragm]

About 0.1 g of inorganic particles are collected from the hydrophilic inorganic particles obtained by the method for separating the nonwoven fabric and the hydrophilic inorganic particles in the composite diaphragm. Preparation of Sample: A double-sided tape is attached to a sample stage, 0.1 g of the hydrophilic inorganic particles are uniformly spread on the sample stage, then, the sample stage is placed in a sample chamber of an element analyzer (Thermoscientific Thermo Fisher, model number: Apreo 2C), the hydrophilic inorganic particles are scanned under vacuum, and the constituent elements of the hydrophilic inorganic particles are confirmed from the scan result.

[Weight Ratio between Polymer Resin and Hydrophilic Inorganic Particles in Composite Diaphragm]

Samples of 20 cm × 20 cm are collected from three sites of left, middle, and right in the width direction of the composite diaphragm (N = 3), and the weights of the samples are respectively measured and denoted by $M_{left}$, $M_{middle}$, and $M_{right}$. Next, the precipitates are filtered, washed, and dried by the above-mentioned method for separation, and the weights of the hydrophilic inorganic particles are obtained, and denoted respectively by $M2_{left}$, $M2_{middle}$, and $M2_{right}$. The weights of the polymer resins are $M3_{left} = (M_{left} - M1_{left} - M2_{left})$, $M3_{middle} = (M_{middle} - M1_{middle} - M2_{middle})$, and $M3_{right} = (M_{right} - M1_{right} - M2_{right})$. The weight ratio of the polymer resin to the inorganic particles = $M3/M2$, and the weight ratios of the left, middle, and right parts are each calculated, and then, the average value thereof is calculated.

[Surface Roughness of Nonwoven Fabric]

Samples of 20 cm × 20 cm are collected respectively from three sites of left, middle, and right in the width direction of the composite diaphragm (N = 3), and dissolved, separated, and dried by the method for separation to obtain nonwoven fabric single bodies. The maximum peak height and maximum valley depth of the surface roughness are automatically measured with the use of a 3D contour shape measuring system VR-5000, and the sum of the obtained maximum peak height and maximum valley depth is defined as the maximum altitude Sz (that is, the surface roughness of the nonwoven fabric). Two points are measured for each sample, and the average value of six points in total is calculated for the three samples.

[Average Pore Size of Nonwoven Fabric]

Samples of 20 cm × 20 cm are collected respectively from three sites of left, middle, and right in the width direction of the composite diaphragm (N = 3), and dissolved, separated, and dried by the method for separation to obtain nonwoven fabric single bodies. Based on the ASTM F316-03 standard, the pore size of the nonwoven fabric is measured with the use of a capillary flow porometer. The samples are placed in a sample chamber, and wetted with a silwick silicone fluid with a surface tension of 15.9 dynes/cm. The bottom clamp of the sample chamber is provided with a porous metal disc insert of 2.54 cm in diameter and 3.175 mm in thickness, and the upper clamp of the sample chamber is provided with a hole of 3.175 mm in diameter. The average value for the three samples is calculated.

[Proportion of Pores of 18 μm or less in Pore Size]

As in the method for testing the average pore size, the total number of pore sizes of 18 μm or less in the pore size range automatically measured by the system is divided by the total number of all pore sizes, and the calculated percentage is defined as the proportion of pores of 18 μm or less in pore size.

[Fiber Diameter]

Samples of 20 cm × 20 cm are collected respectively from three sites of left, middle, and right in the width direction of the composite diaphragm (N = 3), and dissolved, separated, and dried by the method for separation to obtain nonwoven fabric single bodies. The fiber in the nonwoven fabric is photographed (photographing magnification: 800 times) with the use of an electron microscope, and the diameter of the fiber is directly measured. After randomly measuring thirty points, the average value thereof is calculated.

[Basis Weight of Nonwoven Fabric]

Samples of 20 cm × 20 cm are collected respectively from three sites of left, middle, and right in the width direction of the composite diaphragm (N = 3), and dissolved, separated, and dried by the method for separation to obtain nonwoven fabric single bodies. The unit area weights of the nonwoven fabrics are measured, based on the test standard GB/T 24218.1-2009. The calculation formula for the basis weights is as follows: basis weight $(g/m^2)$ = weight (g)/area $(m^2)$, and the average value of the basis weights is calculated.

[Thickness of Nonwoven Fabric]

Samples of 20 cm × 20 cm are collected respectively from three sites of left, middle, and right in the width direction of the composite diaphragm (N = 3), and dissolved, separated, and dried by the method for separation to obtain nonwoven fabric single bodies. The thicknesses of the nonwoven fabrics are measured (unit: mm), based on the test standard GB/T 24218.2-2009, and the average value of the thicknesses is calculated.

[Density of Nonwoven Fabric]

Based on the basis weight w and thickness d of the nonwoven fabric, the density ρ (unit: $g/cm^3$) of the nonwoven fabric is calculated by the following calculation formula, and the average value of the densities is calculated.

$\rho$ $(g/cm^3)$ = [basis weight w $(g/m^2)$/10,000]/[thickness d (mm)/10]

[Airtightness of Nonwoven Fabric]

Samples of 20 cm × 20 cm are collected respectively from three sites of left, middle, and right in the width direction of the composite diaphragm (N = 3), and dissolved, separated, and dried by the method for separation to obtain nonwoven fabric single bodies. Based on the Chinese building material industry standard JCT 211-2009, an airtightness test is performed, and the average value thereof is calculated.

[Area-specific Resistance of Nonwoven Fabric]

Samples of 20 cm × 20 cm are collected respectively from three sites of left, middle, and right in the width direction of the composite diaphragm (N = 3), and dissolved, separated, and dried by the method for separation to obtain nonwoven fabric single bodies. Based on the Chinese Electronics Industry Standard SJ/T 10171.5-91 "Area-specific Resistance Test Standard on Diaphragm for Alkaline Storage Battery", the area-specific resistances of the nonwoven fabrics are measured, the average value thereof is calculated.

[Breaking Strength of Nonwoven Fabric in Warpwise and Weftwise Directions]

Samples of 20 cm × 20 cm are collected respectively from three sites of left, middle, and right in the width direction of the composite diaphragm (N = 3), and dissolved, separated, and dried by the method for separation to obtain nonwoven fabric single bodies. Based on the standard GB/T 24218.3-2010, the breaking strengths of the nonwoven fabrics are measured, and the average value thereof is calculated.

[Porosity of Composite Diaphragm]

Samples of 20 cm × 20 cm are collected from three sites of left, middle, and right in the width direction of the composite diaphragm (N = 3), and immersed in absolute ethanol (purity: 99.7% or more) for 2 hours or longer. The samples are taken out, and then washed twice with pure water, the liquid on the surfaces of the composite diaphragms is quickly and lightly wiped off with the use of filter paper, the mass M of the wet diaphragm is accurately weighed with the use of an electronic analytical balance, and the thickness L of the wet diaphragm is measured with the use of a thickness meter. Next, the diaphragms are subjected to vacuum drying at 60°C for 3 hours or more, and the mass M1 of the dried diaphragm is accurately weighed. The calculation formula for the porosity is as follows: porosity = $(M - M1)/(\rho \cdot A \cdot L)$. In this formula, $\rho$ is the density (g/mL) of pure water, A is the area ($cm^2$) of the diaphragm, L is the thickness (cm) of the wet diaphragm, and M and M1 are respectively the mass (g) of the wet diaphragm and the dry diaphragm, and the average value of the porosities is calculated.

[Basis Weight of Composite Diaphragm]

The unit area weight of the composite diaphragm is measured, based on the test standard GB/T 24218.1-2009. The calculation formula for the basis weight is as follows: basis weight ($g/m^2$) = dry weight (g) /area ($m^2$).

[Thickness of Composite Diaphragm]

The thickness of the composite diaphragm (in mm) is measured, based on the test standard GB/T 24218.2-2009.

[Average Pore Size of Composite Diaphragm]

Based on the ASTM F316-03 standard, the pore size of the composite diaphragm is measured with the use of a capillary flow porometer. The samples are placed in a sample chamber, and wetted with a silwick silicone fluid with a surface tension of 15.9 dynes/cm. The bottom clamp of the sample chamber is provided with a metal disc insert of 2.54 cm in diameter and 3.175 mm in thickness, and the upper clamp of the sample chamber is provided with a hole of 3.175 mm in diameter. The average value of two measurements is defined as the pore size of the sample.

[Range of Thickness of Penetration of Polymer Resin into Nonwoven Fabric]

A cross section of the composite diaphragm is photographed with the use of a scanning electron microscope (photographing magnification: 100 times), and the thickness of the composite diaphragm is directly measured as D (unit: mm). Next, the thickness of the penetration of the polymer resin into the nonwoven fabric is measured as d (unit: mm) (the thickness is the distance from the polymer resin surface layer to the inside of the nonwoven fabric). The thickness of the composite diaphragm and the thickness of the penetration of the polymer resin into the nonwoven fabric are measured for each of five measurement points selected, and the average values thereof are obtained. The range of the thickness of the penetration of the polymer resin into the nonwoven fabric is the ratio (d/D) of the thickness of the penetration of the polymer resin into the nonwoven fabric to the thickness of the composite diaphragm.

[Airtightness of Composite Diaphragm]

Based on the Chinese building material industry standard JCT 211-2009: "Diaphragm Asbestos Cloth" standard, an airtightness test is performed.

[Area-specific Resistance of Composite Diaphragm]

Based on the Chinese Electronics Industry Standard SJ/T 10171.5-91 "Area-specific Resistance Test Standard on Diaphragm for Alkaline Storage Battery", the area-specific resistance of the composite diaphragm is measured.

[Breaking Strength of Composite Diaphragm in Warpwise and Weftwise Directions]

Based on the standard GB/T 24218.3-2010, the breaking strength of the composite diaphragm is measured.

[Breaking Strength Retention Ratio of Composite Diaphragm in Warpwise and Weftwise Directions]

Based on the standard GB/T 24218.3-2010, the initial breaking strength G (the sum of the breaking strengths in the warpwise direction and the weftwise direction) of the composite diaphragm is measured first. Next, the diaphragm is immersed in a KOH solution that has a concentration of 30 wt% at 90°C for 6 months to be taken out, the KOH in the diaphragm is sufficiently washed, the diaphragm is dried at 60°C for 2 hours, and then, the breaking strength G1 (the sum of the breaking strengths in the warpwise direction and the weftwise direction) of the composite diaphragm is measured. The calculation formula for the breaking strength retention ratio is as follows: breaking strength retention ratio = G1/G $\times$ 100%.

[Weight Loss Rate of Composite Diaphragm]

Samples of 20 cm $\times$ 20 cm are collected from three sites of left, middle, and right in the width direction of the composite diaphragm (N = 3), the weights of the samples are respectively measured and denoted by $M_{left}$, $M_{middle}$, and $M_{right}$, and the average value thereof is denoted by M. Next, the sample is immersed in a KOH solution that has a concentration of 30 wt% at 90°C for 6 months, then, the KOH in the diaphragm is sufficiently washed, the diaphragm is dried at 60°C for 2 hours, then, the weights of the samples are respectively measured and denoted by $M1_{left}$, $M1_{middle}$, $M1_{right}$, and the average value thereof is denoted by M1. The calculation formula for the weight loss rate of the composite diaphragm is as follows: weight loss rate = (M - M1)/M $\times$ 100%, and the average value for the three samples is calculated.

Example 01

(1) Production of Nonwoven Gray Fabric

A polyphenylene sulfide fiber of 9 $\mu$m in diameter is subjected to fiber spreading, cotton mixing, carding, web laydown, spunlacing with a maximum pressure of 100 Bar, and drying/heat setting to obtain a hydroentangled nonwoven gray fabric, next, the gray is modified for sulfonation and hydrophilization in a mixed solution of 300 g/L chromic acid and 500 g/L sulfuric acid, at the treatment temperature of 80°C for the treatment time of 12 minutes, and after the sulfonation treatment, the polyphenylene sulfide hydroentangled nonwoven fabric is subjected to washing with water at ordinary temperature, washing with hot water at 50°C, reduction cleaning, and washing with ultrasonic water, dried, and then subjected to calendering under the conditions of roll temperature: 180°C and pressure: 1.2 MPa to obtain a dense and flat nonwoven gray fabric.

(2) Production of Composite Diaphragm

A polysulfone resin, zirconium oxide particles, a glycerin pore-forming agent, and an N-methyl-2-pyrrolidone (NMP) solvent are mixed at weight ratios of 15 wt% : 20 wt% : 1 wt% : 64 wt% to prepare a resin liquid with a viscosity of 15574 Pa·s, one surface of the nonwoven fabric is coated with the resin liquid, the nonwoven fabric is immersed in a coagulation bath to coagulate the polysulfone resin, and form a resin layer on the one surface of the nonwoven fabric, and then, the nonwoven fabric is washed with pure water to obtain a composite diaphragm that has a thickness of 0.55 mm and a basis weight of 190 g/m$^2$, in which the one surface of the nonwoven fabric is penetrated by the resin distributed in a range of 2/3 in the thickness direction from the upper surface to the inside. The respective parameters and physical properties of the composite diaphragm for a water electrolyzer according to the present invention are shown in Table 1.

Examples 02 to 03

The production processes are the same as in Example 01, and the specific compositions and physical properties are shown in Table 1.

Example 04

The water pressure for spunlacing and the roll pressure in Example 01 are respectively adjusted to 140 Bar and 1.4 MPa, the other production process is the same as in Example 01, and the specific composition and physical properties are shown in Table 1.

Example 05

In the production process for the nonwoven fabric, no calendering is performed, and other production process is the same as in Example 01, and the specific composition and physical properties are shown in Table 1.

Examples 06 to 08

The production of the nonwoven fabric and the preparation of the resin liquid are the same as in Example 01, and then, both surfaces of the nonwoven fabric are coated with the resin liquid, the resin liquid is coagulated, and the nonwoven fabric is washed to obtain a composite diaphragm, in which the both surfaces of the nonwoven fabric are penetrated by the resin distributed in a range of 3/4 in the thickness direction from the upper surface to the inside. The respective parameters and physical properties of the composite diaphragm are shown in Tables 1 and 2.

Example 09

The production of the nonwoven fabric is the same as in Example 01, and the polysulfone resin, the zirconium oxide particles, the glycerin pore-forming agent, and the N-methyl-2-pyrrolidone (NMP) solvent are mixed at weight ratios of 15 wt% : 10 wt% : 1 wt% : 74 wt% to prepare a resin liquid with a viscosity of 1760 Pa·s, the resin liquid is caused to penetrate the entire structure of the nonwoven fabric by a method of one dip and one nip, the nonwoven fabric is immersed in a coagulation bath to coagulate the polysulfone resin, and then, the nonwoven fabric is washed with pure water to obtain a polymer porous composite diaphragm that has a thickness of 0.75 mm and a basis weight of 240 g/m$^2$. The respective parameters and physical properties of the composite diaphragm for a water electrolyzer according to the present invention are shown in Table 2.

Example 10

The production process is the same as in Example 09, and the specific composition and physical properties are shown in Table 2. The respective parameters and physical properties of the composite diaphragm for a water electrolyzer according to the present invention are shown in Table 2.

Example 11

The spunlacing for the nonwoven fabric in Example 01 is changed to needle punching, and the other production process is the same as in Example 09, and the respective parameters and physical properties of the composite diaphragm for a water electrolyzer according to the present invention are shown in Table 2.

Example 12

In the production process for the nonwoven fabric, no treatment for sulfonation and hydrophilization is performed, and other production process is the same as in Example 01, and the specific composition and physical properties are shown in Table 2.

Example 13

The production of the nonwoven fabric is the same as in Example 06, and the polysulfone resin, the zirconium oxide particles, the glycerin pore-forming agent, and the N-methyl-2-pyrrolidone (NMP) solvent are mixed at weight ratios of 15 wt% : 10 wt% : 1 wt% : 74 wt% to prepare a resin liquid with a viscosity of 1760 Pa·s, both surfaces of the nonwoven fabric are coated with the resin liquid, the resin liquid is coagulated, and the nonwoven fabric is washed to obtain a composite diaphragm, in which the both surfaces of the nonwoven fabric are penetrated by the resin distributed in a range of 3/4 in the thickness direction from the upper surface to the inside. The respective parameters and physical properties of the composite diaphragm are shown in Table 3.

Example 14

The production of the nonwoven fabric is the same as in Example 06, and the polysulfone resin, the zirconium oxide particles, the glycerin pore-forming agent, and the N-methyl-2-pyrrolidone (NMP) solvent are mixed at weight ratios of 13 wt% : 48 wt% : 1 wt% : 38 wt% to prepare a resin liquid with a viscosity of 996500 Pa·s, both surfaces of the nonwoven fabric are coated with the resin liquid, the resin liquid is coagulated, and the nonwoven fabric is washed to obtain a composite diaphragm, in which the both surfaces of the nonwoven fabric are penetrated by the resin distributed in a range of 1/2 in the thickness direction from the upper surface to the inside. The respective parameters and physical properties of the composite diaphragm are shown in Table 3.

Example 15

The production of the nonwoven fabric is the same as in Example 01, and the polysulfone resin, the glycerin pore-forming agent, and the N-methyl-2-pyrrolidone (NMP) solvent are mixed at weight ratios of 15 wt% : 1 wt% : 84 wt% to prepare a resin liquid with a viscosity of 510 Pa·s, both surfaces of the nonwoven fabric are coated with the resin liquid, the resin liquid is coagulated, and the nonwoven fabric is washed to obtain a composite diaphragm, in which the entire structure of the nonwoven fabric is penetrated by the resin. The respective parameters and physical properties of the composite diaphragm are shown in Table 3.

Example 16

The production of the nonwoven fabric is the same as in Example 01, and the polyether sulfone resin, the glycerin pore-forming agent, and the N-methyl-2-pyrrolidone (NMP) solvent are mixed at weight ratios of 15 wt% : 1 wt% : 84 wt% to prepare a resin liquid with a viscosity of 830 Pa·s, both surfaces of the nonwoven fabric are coated with the resin liquid, the resin liquid is coagulated, and the nonwoven fabric is washed to obtain a composite diaphragm, in which the entire structure of the nonwoven fabric is penetrated by the resin. The respective parameters and physical properties of the composite diaphragm are shown in Table 3.

Example 17

The production of the nonwoven fabric is the same as in Example 01, and the polyether sulfone resin, the zirconium oxide particles, the glycerin pore-forming agent, and the N-methyl-2-pyrrolidone (NMP) solvent are mixed at weight ratios of 15 wt% : 20 wt% : 1 wt% : 64 wt% to prepare a resin liquid with a viscosity of 16083 Pa·s, both surfaces of the nonwoven fabric are coated with the resin liquid, the resin liquid is coagulated, and the nonwoven fabric is washed to obtain a composite diaphragm, in which the both surfaces of the nonwoven fabric are penetrated by the resin distributed in a range of 1/2 in the thickness direction from the upper surface to the inside. The respective parameters and physical properties of the composite diaphragm are shown in Table 3.

Example 18

The production of the nonwoven fabric is the same as in Example 01, and the polysulfone resin, the cerium oxide particles, the glycerin pore-forming agent, and the N-methyl-2-pyrrolidone (NMP) solvent are mixed at weight ratios of 15 wt% : 10 wt% : 1 wt% : 74 wt% to prepare a resin liquid with a viscosity of 2440 Pa·s, both surfaces of the nonwoven fabric are coated with the resin liquid, the resin liquid is coagulated, and the nonwoven fabric is washed to obtain a composite diaphragm, in which the both surfaces of the nonwoven fabric are penetrated by the resin distributed in a range of 1/2 in the thickness direction from the upper surface to the inside. The respective parameters and physical properties of the composite diaphragm are shown in Table 3.

The physical properties of the nonwoven fabrics, shown in each table, are data obtained by measuring nonwoven fabric single bodies. Specifically, the composite diaphragm is immersed in an N-methyl-2-pyrrolidone solvent for 12 hours or longer to completely dissolve the resin layer, and dried in a thermostatic oven at 60°C for 2 hours to obtain a nonwoven fabric single body. The physical properties of the nonwoven fabric single bodies are measured and listed in the tables. In the present invention, the physical properties of the nonwoven gray fabric and the physical properties of the nonwoven fabric single body are slightly different, but are at the same level.

Comparative Example 01

A polyphenylene sulfide fiber of 9 $\mu$m in diameter is subjected to fiber spreading, cotton mixing, carding, web laydown, spunlacing with a maximum spunlacing pressure of 100 Bar, and drying/heat setting to obtain a hydroentangled nonwoven gray fabric, next, the gray is modified for sulfonation and hydrophilization in a mixed solution of 300 g/L chromic acid and 500 g/L sulfuric acid, at the treatment temperature of 80°C for the treatment time of 12 minutes, and after the sulfonation treatment, the polyphenylene sulfide hydroentangled nonwoven fabric is subjected to washing with water at ordinary temperature, washing with hot water at 50°C, reduction cleaning, and washing with ultrasonic water, dried, and then subjected to calendering to obtain a dense and flat nonwoven fabric. The physical properties of the diaphragm are shown in Table 4.

Comparative Example 02

(1) Fabrication of Woven Fabric Mesh

A woven fabric mesh of 0.50 mm in pore size is woven with the use of polyphenylene sulfide monofilaments of 60 $\mu$m in fiber diameter to obtain a woven fabric mesh that has a basis weight of 30 g/m$^2$ and a thickness of 0.10 mm.

(2) Production of Composite Diaphragm

A polysulfone resin, zirconium oxide particles, a glycerin pore-forming agent, and an N-methyl-2-pyrrolidone (NMP) solvent are mixed at weight ratios of 15 wt% : 20 wt% : 1 wt% : 64 wt% to prepare a resin liquid with a viscosity of 15574 Pa·s, both surfaces of the woven fabric mesh are coated with the resin liquid, the woven fabric mesh is immersed in a coagulation bath to coagulate the polysulfone resin, and form a resin layer on the both surfaces of the woven fabric mesh, and then, the woven fabric mesh is washed with pure water to obtain a composite diaphragm that has a thickness of 0.35 mm and a basis weight of 240 g/m$^2$. Because of the small thickness and large pore size of the woven fabric mesh, the composite diaphragm has a form in which the woven fabric mesh is wrapped in the resin layer. The respective parameters and physical properties of the composite diaphragm are shown in Table 4.

Comparative Example 03

(1) Production of Wetlaid Nonwoven Gray Fabric

Unstretched polyphenylene sulfide yarns of 9 $\mu$m in diameter and normal polyphenylene sulfide fibers are mixed at weight ratios of 30 : 70, and subjected to steps of wet cotton mixing, web laydown, and calendering setting to obtain a nonwoven gray fabric, next, the nonwoven gray fabric is modified for sulfonation and hydrophilization in a mixed solution of 300 g/L chromic acid and 500 g/L sulfuric acid, at the treatment temperature of 80°C for the treatment time for 12 minutes, and after the sulfonation treatment, the polyphenylene sulfide wetlaid nonwoven fabric is subjected to washing with water at ordinary temperature, washing with hot water at 50°C, reduction cleaning, and washing with ultrasonic water, and dried to obtain a wetlaid nonwoven gray fabric subjected to the hydrophilic treatment. The other production process is the same as in Example 01, and the specific composition and physical properties are shown in Table 4.

Comparative example 04

The water pressure for spunlacing in Example 01 is adjusted to 80 Bar, the other production process is the same as in Example 01, and the specific composition and physical properties are shown in Table 4.

Comparative example 05

The water pressure for spunlacing in Example 01 is adjusted to 140 Bar, the other production process is the same as in Example 01, and the specific composition and physical properties are shown in Table 4.

Table 1

| Item | | | Example 01 | Example 02 | Example 03 | Example 04 | Example 05 | Example 06 |
|---|---|---|---|---|---|---|---|---|
| Nonwoven Fabric | Nonwoven Fabric Form | | Spunlace | Spunlace | Spunlace | Spunlace | Spunlace | Spunlace |
| | PPS Fiber Diameter ($\mu$m) | | 9 | 22 | 5 | 9 | 9 | 9 |
| | Thickness (mm) | | 0.40 | 0.51 | 0.36 | 0.25 | 0.55 | 0.40 |
| | Basis Weight (g/m$^2$) | | 120 | 120 | 120 | 120 | 120 | 120 |
| | Density (g/cm$^3$) | | 0.30 | 0.24 | 0.33 | 0.48 | 0.22 | 0.30 |
| | Surface Roughness ($\mu$m) | | 315 | 532 | 269 | 284 | 1027 | 315 |
| | Average Pore Size ($\mu$m) | | 12.2 | 17.3 | 7.3 | 5.4 | 16.7 | 12.2 |
| | Proportion of Pores of 18 $\mu$m or less in Pore Size | | 53 | 44 | 81 | 89 | 45 | 53 |
| | Hydrophilic Treatment | | Yes | Yes | Yes | Yes | Yes | Yes |
| | Airtightness (mm H$_2$O) | | 480 | 320 | 570 | 620 | 324 | 480 |
| | Area-specific Resistance ($\Omega\cdot$cm$^2$) | | 36.0 | 30.4 | 46.0 | 71.2 | 28.8 | 36.0 |
| | Breaking Strength (N/5 cm) | MD | 272 | 263 | 316 | 327 | 215 | 272 |
| | | CD | 461 | 396 | 493 | 515 | 378 | 461 |
| Composite Diaphragm | Proportion of Nonwoven Fabric (wt%) | | 63 | 63 | 63 | 63 | 63 | 50 |
| | Single/Double Surface Coated | | Single | Single | Single | Single | Single | Both |
| | Type of Polymer Resin | | Polysulfone | Polysulfone | Polysulfone | Polysulfone | Polysulfone | Polysulfone |
| | Content of Polymer Resin (wt%) | | 15 | 15 | 15 | 15 | 15 | 15 |
| | Type of Hydrophilic Inorganic Particles | | ZrO$_2$ | ZrO$_2$ | ZrO$_2$ | ZrO$_2$ | ZrO$_2$ | ZrO$_2$ |
| | Content of Hydrophilic Inorganic Particles (wt%) | | 20 | 20 | 20 | 20 | 20 | 20 |
| | Polymer Resin : Hydrophilic Inorganic Particles Weight Ratio | | 1:1.33 | 1:1.33 | 1:1.33 | 1:1.33 | 1:1.33 | 1:1.33 |
| | Type of Pore-forming Agent | | Glycerin | Glycerin | Glycerin | Glycerin | Glycerin | Glycerin |
| | Content of Pore-forming Agent (wt%) | | 1 | 1 | 1 | 1 | 1 | 1 |
| | Resin Viscosity (Pa·s) | | 15574 | 15574 | 15574 | 15574 | 15574 | 15574 |
| | Thickness (mm) | | 0.55 | 0.70 | 0.57 | 0.40 | 0.73 | 0.55 |
| | Basis Weight (g/m$^2$) | | 190 | 190 | 190 | 190 | 190 | 240 |
| | Porosity (%) | | 68 | 72 | 54 | 58 | 75 | 61 |

(continued)

| Item | | Example 01 | Example 02 | Example 03 | Example 04 | Example 05 | Example 06 |
|---|---|---|---|---|---|---|---|
| Average Pore Size (μm) | | 0.32 | 0.56 | 0.22 | 0.24 | 0.35 | 0.27 |
| Area-specific Resistance (Ω·cm²) | | 83 | 68 | 96 | 124 | 70 | 90 |
| Weight Loss Rate after 6 months (wt%) | | 2.0 | 3.5 | 4.3 | 5.2 | 8.8 | 1.3 |
| Initial Airtightness (mm $H_2O$) | | >700 | >700 | >700 | >700 | >700 | >700 |
| Airtightness after 6 months (mm $H_2O$) | | >700 | 680 | 610 | 650 | 453 | >700 |
| Initial Breaking Strength (N/50 mm) | MD | 356 | 343 | 385 | 412 | 287 | 429 |
| | CD | 493 | 428 | 525 | 553 | 415 | 497 |
| Breaking Strength after 6 months (N/50 mm) | MD | 326 | 295 | 314 | 342 | 243 | 385 |
| | CD | 472 | 376 | 432 | 458 | 361 | 476 |
| Breaking Strength Retention Ratio after 6 months (%) | | 94 | 87 | 82 | 83 | 86 | 93 |

Table 2

| | Item | Example 07 | Example 08 | Example 09 | Example 10 | Example 11 | Example 12 |
|---|---|---|---|---|---|---|---|
| Nonwoven Fabric | Nonwoven Fabric Form | Spunlace | Spunlace | Spunlace | Spunlace | Needle Punch | Spunlace |
| | PPS Fiber Diameter ($\mu$m) | 9 | 9 | 9 | 9 | 9 | 9 |
| | Thickness (mm) | 0.40 | 0.40 | 0.66 | 1.12 | 1.58 | 0.38 |
| | Basis Weight (g/m$^2$) | 120 | 120 | 200 | 350 | 350 | 120 |
| | Density (g/cm$^3$) | 0.30 | 0.30 | 0.30 | 0.31 | 0.22 | 0.32 |
| | Surface Roughness ($\mu$m) | 315 | 315 | 349 | 408 | 747 | 283 |
| | Average Pore Size ($\mu$m) | 12.2 | 12.2 | 11.8 | 10.3 | 26.4 | 14.7 |
| | Proportion of Pores of 18 $\mu$m or less in Pore Size | 53 | 53 | 55 | 64 | 38 | 46 |
| | Hydrophilic Treatment | Yes | Yes | Yes | Yes | Yes | No |
| | Airtightness (mm H$_2$O) | 480 | 480 | 645 | >700 | 578 | 450 |
| | Area-specific Resistance ($\Omega \cdot$cm$^2$) | 36.0 | 36.0 | 64.0 | 118 | 104 | 44.8 |
| | Breaking Strength (N/5 cm) MD CD | 272 | 272 | 358 | 445 | 404 | 293 |
| | | 461 | 461 | 706 | 1385 | 1128 | 474 |

(continued)

| Item | | Example 07 | Example 08 | Example 09 | Example 10 | Example 11 | Example 12 |
|---|---|---|---|---|---|---|---|
| Composite Diaphragm | Proportion of Nonwoven Fabric (wt%) | 33 | 86 | 83 | 90 | 90 | 63 |
| | Single/Double Surface Coated | Both | Both | Entire Body | Entire Body | Entire Body | Single |
| | Type of Polymer Resin | Polysulfone | Polysulfone | Polysulfone | Polysulfone | Polysulfone | Polysulfone |
| | Content of Polymer Resin (wt%) | 15 | 15 | 15 | 15 | 15 | 15 |
| | Type of Hydrophilic Inorganic Particles | $ZrO_2$ | $ZrO_2$ | $ZrO_2$ | $ZrO_2$ | $ZrO_2$ | $ZrO_2$ |
| | Content of Hydrophilic Inorganic Particles (wt%) | 20 | 20 | 10 | 10 | 10 | 20 |
| | Polymer Resin : Hydrophilic Inorganic Particles Weight Ratio | 1:1.33 | 1:1.33 | 1:0.67 | 1:0.67 | 1:0.67 | 1:1.33 |
| | Type of Pore-forming Agent | Glycerin | Glycerin | Glycerin | Glycerin | Glycerin | Glycerin |
| | Content of Pore-forming Agent (wt%) | 1 | 1 | 1 | 1 | 1 | 1 |
| | Resin Viscosity (Pa·s) | 15574 | 15574 | 1760 | 1760 | 1760 | 15574 |
| | Thickness (mm) | 0.65 | 0.46 | 0.75 | 1.23 | 1.71 | 0.61 |
| | Basis Weight (g/m$^2$) | 360 | 140 | 240 | 390 | 390 | 190 |
| | Porosity (%) | 55 | 75 | 68 | 72 | 78 | 72 |
| | Average Pore Size ($\mu$m) | 0.29 | 4.36 | 4.59 | 3.57 | 5.63 | 0.42 |
| | Area-specific Resistance ($\Omega \cdot cm^2$) | 122 | 45 | 84 | 166 | 136 | 96 |
| | Weight Loss Rate after 6 months (wt%) | 2.0 | 4.6 | 2.8 | 3.2 | 8.6 | 3.4 |
| | Initial Airtightness (mm $H_2O$) | >700 | 680 | >700 | >700 | >700 | >700 |
| | Airtightness after 6 months (mm $H_2O$) | 630 | 560 | >700 | >700 | 635 | >700 |
| Initial Breaking Strength (N/50 mm) | MD | 484 | 313 | 387 | 496 | 457 | 339 |
| | CD | 529 | 487 | 738 | 1423 | 1409 | 484 |
| Breaking Strength after 6 months (N/50 mm) | MD | 445 | 268 | 369 | 453 | 418 | 305 |
| | CD | 487 | 420 | 714 | 1392 | 1195 | 436 |
| | Breaking Strength Retention Ratio after 6 months (%) | 92 | 86 | 96 | 96 | 86 | 90 |

Table 3

| Item | | | Example 13 | Example 14 | Example 15 | Example 16 | Example 17 | Example 18 |
|---|---|---|---|---|---|---|---|---|
| Nonwoven Fabric | Nonwoven Fabric Form | | Spunlace | Spunlace | Spunlace | Spunlace | Needle Punch | Spunlace |
| | PPS Fiber Diameter ($\mu$m) | | 9 | 9 | 9 | 9 | 9 | 9 |
| | Thickness (mm) | | 0.40 | 0.40 | 0.40 | 0.40 | 0.40 | 0.40 |
| | Basis Weight (g/m$^2$) | | 120 | 120 | 120 | 120 | 120 | 120 |
| | Density (g/cm$^3$) | | 0.30 | 0.30 | 0.30 | 0.30 | 0.30 | 0.30 |
| | Surface Roughness ($\mu$m) | | 315 | 315 | 315 | 315 | 315 | 315 |
| | Average Pore Size ($\mu$m) | | 12.2 | 12.2 | 12.2 | 12.2 | 12.2 | 12.2 |
| | Proportion of Pores of 18 $\mu$m or less in Pore Size | | 53 | 53 | 53 | 53 | 53 | 53 |
| | Hydrophilic Treatment | | Yes | Yes | Yes | Yes | Yes | Yes |
| | Airtightness (mm H$_2$O) | | 480 | 480 | 480 | 480 | 480 | 480 |
| | Area-specific Resistance ($\Omega \cdot$cm$^2$) | | 36.0 | 36.0 | 36.0 | 36.0 | 36.0 | 36.0 |
| | Breaking Strength (N/5 cm) | MD | 272 | 272 | 272 | 272 | 272 | 272 |
| | | CD | 461 | 461 | 461 | 461 | 461 | 461 |
| Composite Diaphragm | Proportion of Nonwoven Fabric (wt%) | | 41 | 30 | 43 | 51 | 48 | 50 |
| | Single/Double Surface Coated | | Both | Both | Both | Both | Both | Both |
| | Type of Polymer Resin | | Polysulfone | Polysulfone | Polysulfone | Polyether Sulfone | Polyether Sulfone | Polysulfone |
| | Content of Polymer Resin (wt%) | | 15 | 13 | 15 | 15 | 15 | 15 |
| | Type of Hydrophilic Inorganic Particles | | ZrO$_2$ | ZrO$_2$ | - | - | ZrO$_2$ | CeO$_2$ |
| | Content of Hydrophilic Inorganic Particles (wt%) | | 10 | 48 | 0 | 0 | 20 | 10 |
| | Polymer Resin : Hydrophilic Inorganic Particles Weight Ratio | | 1:0.67 | 1:3.7 | - | - | 1:1.33 | 1:0.67 |
| | Type of Pore-forming Agent | | Glycerin | Glycerin | Glycerin | Glycerin | Glycerin | Glycerin |
| | Content of Pore-forming Agent (wt%) | | 1 | 1 | 1 | 1 | 1 | 1 |

(continued)

| Item | | Example 13 | Example 14 | Example 15 | Example 16 | Example 17 | Example 18 |
|---|---|---|---|---|---|---|---|
| Resin Viscosity (Pa·s) | | 1760 | 996500 | 510 | 830 | 16083 | 2440 |
| Thickness (mm) | | 0.56 | 0.66 | 0.53 | 0.53 | 0.55 | 0.55 |
| Basis Weight (g/m$^2$) | | 290 | 400 | 230 | 235 | 252 | 240 |
| Porosity (%) | | 65 | 62 | 67 | 67 | 61 | 58 |
| Average Pore Size ($\mu$m) | | 0.28 | 0.23 | 0.69 | 0.65 | 0.28 | 0.32 |
| Area-specific Resistance ($\Omega$·cm$^2$) | | 134 | 88 | 168 | 144 | 98 | 106 |
| Weight Loss Rate after 6 months (wt%) | | 0.8 | 4.1 | 0.5 | 0.5 | 1.1 | 1.5 |
| Initial Airtightness (mm H$_2$O) | | >700 | >700 | >700 | >700 | >700 | >700 |
| Airtightness after 6 months (mm H$_2$O) | | >700 | >700 | >700 | >700 | >700 | >700 |
| Initial Breaking Strength (N/50 mm) | MD | 511 | 430 | 302 | 323 | 450 | 471 |
| | CD | 780 | 530 | 519 | 520 | 552 | 570 |
| Breaking Strength after 6 months (N/50 mm) | MD | 488 | 380 | 289 | 310 | 406 | 415 |
| | CD | 748 | 445 | 490 | 499 | 496 | 501 |
| Breaking Strength Retention Ratio after 6 months (%) | | 96 | 84 | 96 | 96 | 90 | 88 |

Table 4

| Item | | | Comparative Example 01 | Comparative Example 02 | Comparative Example 03 | Comparative Example 04 | Comparative Example 05 |
|---|---|---|---|---|---|---|---|
| Base | Form | | Spunlace | Woven Fabric Mesh | Wetlaid Nonwoven Fabric | Spunlace | Spunlace |
| | PPS Fiber Diameter ($\mu$m) | | 9 | 60 | 9 | 9 | 9 |
| | Thickness (mm) | | 0.40 | 0.10 | 0.18 | 0.30 | 0.70 |
| | Basis Weight (g/m$^2$) | | 120 | 30 | 120 | 50 | 400 |
| | Density (g/cm$^3$) | | 0.30 | 0.30 | 0.67 | 0.17 | 0.57 |
| | Surface Roughness ($\mu$m) | | 315 | 86 | 79 | 359 | 396 |
| | Average Pore Size ($\mu$m) | | 12.2 | 500 | 8.3 | 25.6 | 7.6 |

(continued)

| Item | | Comparative Example 01 | Comparative Example 02 | Comparative Example 03 | Comparative Example 04 | Comparative Example 05 |
|---|---|---|---|---|---|---|
| | Proportion of Pores of 18 $\mu$m or less in Pore Size | 53 | - | 78 | 29 | 83 |
| | Hydrophilic Treatment | Yes | No | Yes | Yes | Yes |
| | Airtightness (mm $H_2O$) | 480 | - | 585 | 153 | >700 |
| | Area-specific Resistance ($\Omega \cdot cm^2$) | 36.0 | - | 52.0 | 9.6 | 192 |
| | Breaking Strength (N/5 cm) MD CD | 272 | 54 | 272 | 89 | 682 |
| | | 461 | 48 | 461 | 135 | 1831 |
| Composite Diaphragm | Proportion of Nonwoven Fabric (wt%) | 100 | 12.5 | 63 | 42 | 85 |
| | Single/Double Surface Coated | - | Both | Single | Single | Single |
| | Type of Polymer Resin | - | Polysulfone | Polysulfone | Polysulfone | Polysulfone |
| | Content of Polymer Resin (wt%) | - | 15 | 15 | 15 | 15 |
| | Type of Hydrophilic Inorganic Particles | | $ZrO_2$ | $ZrO_2$ | $ZrO_2$ | $ZrO_2$ |
| | Content of Hydrophilic Inorganic Particles (wt%) | - | 20 | 20 | 20 | 20 |
| | Polymer Resin : Hydrophilic Inorganic Particles Weight Ratio | - | 1:1.33 | 1:1.33 | 1:1.33 | 1:1.33 |
| | Type of Pore-forming Agent | - | Glycerin | Glycerin | Glycerin | Glycerin |
| | Content of Pore-forming Agent (wt%) | - | 1 | 1 | 1 | 1 |
| | Resin Viscosity (Pa·s) | - | 15574 | 15574 | 15574 | 15574 |
| | Thickness (mm) | - | 0.35 | 0.45 | 0.53 | 0.97 |
| | Basis Weight (g/m$^2$) | - | 240 | 190 | 120 | 470 |
| | Porosity (%) | - | 36 | 42 | 75 | 46 |
| | Average Pore Size ($\mu$m) | - | 0.25 | 0.21 | 0.93 | 0.33 |
| | Area-specific Resistance ($\Omega \cdot cm^2$) | - | 60.8 | 123 | 56 | 240 |
| | Weight Loss Rate after 6 months (wt%) | 0.7 | 6.3 | 8.6 | 8.4 | 3.5 |
| | Initial Airtightness (mm $H_2O$) | 480 | >700 | >700 | >700 | >700 |

(continued)

| Item | | Comparative Example 01 | Comparative Example 02 | Comparative Example 03 | Comparative Example 04 | Comparative Example 05 |
|---|---|---|---|---|---|---|
| Airtightness after 6 months (mm $H_2O$) | | 420 | 456 | 384 | 116 | >700 |
| Initial Breaking Strength (N/50 mm) | MD | 272 | 113 | 484 | 156 | 862 |
| | CD | 461 | 109 | 529 | 208 | 1965 |
| Breaking Strength after 6 months (N/50 mm) | MD | 229 | 78 | 405 | 73 | 725 |
| | CD | 379 | 72 | 426 | 119 | 1850 |
| Breaking Strength Retention Ratio after 6 months (%) | | 83 | 68 | 68 | 53 | 91 |

From Tables 1 to 4,

(1) it has been determined that, from Example 01 and Example 02, under the same conditions, the fiber diameter and the average pore size of the nonwoven fabric in the former fall within the preferable ranges, whereas the fiber diameter and the average pore size of the nonwoven fabric in the latter are slightly larger, and thus, the former is higher in the airtightness of the nonwoven fabric, and after the immersion in the 30% alkaline solution at 90°C for 6 months, is lower in the weight loss rate of the composite diaphragm, higher in the airtightness of the composite diaphragm, and excellent in service durability under the alkaline solution environment as compared with the latter.

(2) It has been determined that, from Example 01 and Example 03, under the same conditions, the fiber diameter and the average pore size of the nonwoven fabric in the former fall within the preferable ranges, whereas the average pore size of nonwoven fabric in the latter is slightly smaller, and thus, the former is slightly more bulky in the structure of the nonwoven fabric, lower in the area-specific resistance thereof, sufficient in the penetration of the resin layer into the nonwoven fabric, lower in the area-specific resistance of the obtained composite diaphragm, and after the immersion in the 30% alkaline solution at 90°C for 6 months, is lower in the weight loss rate of the composite diaphragm, higher in the airtightness thereof, and also higher in the breaking strength retention ratio thereof, that is, excellent in service durability under the alkaline solution environment as compared with the latter.

(3) It has been determined that, from Example 01 and Example 04, because the thickness and density of the nonwoven fabric in the former fall within the preferable ranges under the same conditions, the former is more bulky in the structure of the nonwoven fabric, lower in the area-specific resistance thereof, sufficient in the penetration of the polymer resin into the nonwoven fabric, larger in the area of contact with the fiber, higher in the adhesion strength of the resin layer, and after the immersion in the 30% alkaline solution at 90°C for 6 months, is higher in the breaking strength retention ratio of the composite diaphragm, that is, excellent in service durability under the alkaline solution environment as compared with the latter.

(4) It has been determined that, from Example 01 and Example 05, because the thickness, density, and surface roughness of the nonwoven fabric in the former fall within the preferable ranges under the same conditions, the former is, after the immersion in the 30% alkaline solution at 90°C for 6 months, lower in the weight loss rate of the composite diaphragm, higher in the airtightness thereof, and higher in the breaking strength retention ratio thereof, that is, excellent in the service durability under the alkaline solution environment as compared with the latter.

(5) It has been determined that, from Examples 06 to 08, because the nonwoven fabric according to Example 06 has a weight ratio in the composite diaphragm within the preferable range under the same conditions, Example 06 is, after the immersion in the 30% alkaline solution at 90°C for 6 months, lower in the weight loss rate, higher in the airtightness, and higher in the breaking strength retention ratio, that is, excellent in service durability under the alkaline solution environment as compared with Examples 07 and 08.

(6) It has been determined that, from Example 09 and Example 10, because the basis weight of the nonwoven fabric in the former falls within the preferable range under the same conditions, the former is lower in the area-specific resistance of the composite diaphragm and smaller in the energy consumption of the hydrogen production equipment as compared with the latter.

(7) It has been determined that, from Example 10 and Example 11, because the latter has, under the same conditions, the needlepunched nonwoven fabric for which the needle of the needle punch is thick, the latter is higher in the surface roughness of the obtained nonwoven fabric, larger in the pore size thereof, and lower in the airtightness thereof, and thus, the former is, after the immersion in the 30% alkaline solution at 90°C for 6 months, lower in the weight loss rate of the composite diaphragm, higher in the airtightness thereof, and higher in the breaking strength retention ratio thereof, that is, excellent in the service durability under the alkaline solution environment as compared with the latter.

(8) It has been determined that, from the viewpoint of Example 01 and Example 12, because the nonwoven fabric in the former is obtained by the sulfonation and hydrophilic treatment under the same conditions, the former makes the resin more likely to penetrate the nonwoven fabric, thus making the resin coating layer less likely to be peeled off, and is slightly higher in the breaking strength retention ratio after the immersion in the 30% alkaline solution at 90°C for 6 months, that is, excellent in service durability under the alkaline solution environment as compared with the latter.

(9) It has been determined that, from Example 06 and Example 13, because the former has the weight ratio between the polymer resin and the hydrophilic inorganic particles within the more preferable range under the same conditions, the former is lower in the area-specific resistance of the composite diaphragm as compared with the latter.

(10) It has been determined that, from Example 06 and Example 14, because the latter is higher in the weight ratio between the polymer resin and the hydrophilic inorganic particles under the same conditions, the latter is, after the immersion in the 30% alkaline solution at 90°C for 6 months, higher in the weight loss rate of the composite diaphragm and lower in the breaking strength retention ratio thereof as compared with the former.

(11) It has been determined that, from Example 13 and Example 15, because the latter has no hydrophilic inorganic particles added under the same conditions, the latter is higher in the electrical resistance of the composite diaphragm as compared with the former.

(12) It has been determined that, from Example 01 and Comparative Example 01, because the former and the latter are: the composite diaphragm composed of the nonwoven fabric and the resin; and the single nonwoven fabric, respectively under the same conditions, the former is higher in airtightness and also excellent in durability in long-term use as compared with the latter.

(13) It has been determined that, from the viewpoint of Example 06 and Comparative Example 02, the latter is excessively low in the weight ratio of the base fabric in the composite diaphragm under the same conditions, and is, as compared with the former, lower in the airtightness of the composite diaphragm and lower in the breaking strength retention ratio thereof, that is, inferior in durability.

(14) It has been determined that, from Example 01 and Comparative Example 03, because of the use of the wetlaid nonwoven fabric with the excessively large density and the excessively small thickness in the latter under the same conditions, the latter is, as compared with the former, higher in the weight loss rate of the composite diaphragm, lower in the airtightness thereof, and lower in the breaking strength retention ratio thereof, that is, inferior in durability.

(15) It has been determined that, from Example 01 and Comparative Example 04, the latter is excessively low in basis weight and also excessively low in specific density between the basis weight and the thickness under the same conditions, and is, as compared with the former, poorer in the airtightness of the composite diaphragm and lower in the breaking strength retention ratio thereof, that is, inferior in durability.

(16) It has been determined that, from Example 01 and Comparative Example 05, the latter is excessively high in basis weight and also excessively high in specific density between the basis weight and the thickness under the same conditions, and is, as compared with the former, excessively high in the electrical resistance of the composite diaphragm, that is, excessively large in the energy consumption of the hydrogen production equipment, as compared with the former.

**Claims**

1. A composite diaphragm for a water electrolyzer comprising a nonwoven fabric and a polymer resin, wherein the polymer resin is present on one surface or both surfaces of the nonwoven fabric, and a structure of the nonwoven fabric is penetrated by a part or all of the polymer resin, and the nonwoven fabric has a weight ratio of 20 to 95% in the composite diaphragm, a thickness of 0.20 to 2.00 mm, a basis weight of 100 to 400 g/m$^2$, and a density of 0.20 to 0.50 g/cm$^3$.

2. The composite diaphragm for a water electrolyzer according to claim 1, wherein the nonwoven fabric is a hydroentangled nonwoven fabric.

3. The composite diaphragm for a water electrolyzer according to claim 1, wherein the polymer resin is at least one of a polysulfone, a polyether sulfone, a polyphenyl sulfone, a polyvinylidene fluoride, a polycarbonate, a polytetrafluoroethylene, a polypropylene, a polyphenylene sulfide, a polyketone, polyetheretherketone, a polyimide, and a polyetherimide.

4. The composite diaphragm for a water electrolyzer according to claim 3, wherein the polymer resin is a polysulfone resin.

5. The composite diaphragm for a water electrolyzer according to claim 1, wherein the composite diaphragm contains hydrophilic inorganic particles, and the hydrophilic inorganic particles are at least one of oxides or hydroxides of zirconium, bismuth, and cerium.

6. The composite diaphragm for a water electrolyzer according to claim 5, wherein the hydrophilic inorganic particles are zirconium oxide.

7. The composite diaphragm for a water electrolyzer according to claim 1 or 5, wherein the composite diaphragm has a weight ratio between the polymer resin and the hydrophilic inorganic particles of 1 : 0.5 to 3.5.

8. The composite diaphragm for a water electrolyzer according to claim 1 or 2, wherein the nonwoven fabric has a surface roughness of 150 to 800 $\mu$m.

9. The composite diaphragm for a water electrolyzer according to claim 1 or 2, wherein the nonwoven fabric has an average pore size of 8.0 to 18.0 $\mu$m.

10. The composite diaphragm for a water electrolyzer according to claim 9, wherein a proportion of pores of 18 $\mu$m or less in pore size is 40% or more in the nonwoven fabric.

11. The composite diaphragm for a water electrolyzer according to claim 1 or 2, wherein the composite diaphragm has a weight loss rate of 5.0% or less after immersing the composite diaphragm in a 30% alkaline solution at 90°C for 6 months.

12. The composite diaphragm for a water electrolyzer according to claim 1 or 2, wherein the composite diaphragm has a breaking strength retention ratio of 80% or more after immersing the composite diaphragm in a 30% alkaline solution at 90°C for 6 months.

## INTERNATIONAL SEARCH REPORT

| International application No. |
|---|
| **PCT/CN2024/113883** |

### A. CLASSIFICATION OF SUBJECT MATTER

C25B13/08(2006.01)i;  B32B27/12(2006.01)i;  B32B27/20(2006.01)i;  C25B1/04(2021.01)i

According to International Patent Classification (IPC) or to both national classification and IPC

### B. FIELDS SEARCHED

Minimum documentation searched (classification system followed by classification symbols)

IPC:  C25B,B32B

Documentation searched other than minimum documentation to the extent that such documents are included in the fields searched

Electronic data base consulted during the international search (name of data base and, where practicable, search terms used)

CNTXT, ENTXTC, CNKI, ISI Web of Science: 单位面积质量, 单位面积重量, 非织造, 非织造布, 隔膜, 碱溶液中浸渍, 聚砜, 克重, 树脂, 水刺, 水刺无纺布, 水电解, 无纺布, 氧化锆, mass per unit area, weight per unit area, g/m2, non-woven, membrane, impregnation, alkali+, polysulfone, grammage, resin, spunlac+, hydroelectrolysis, zirconia, ZrO2

### C. DOCUMENTS CONSIDERED TO BE RELEVANT

| Category* | Citation of document, with indication, where appropriate, of the relevant passages | Relevant to claim No. |
|---|---|---|
| X | JP 2020007574 A (NIPPON SHOKUBAI CO., LTD.) 16 January 2020 (2020-01-16)<br>see description, paragraphs [0024]-[0087] | 1-12 |
| X | WO 2022138100 A1 (TOYO BOSEKI K. K.) 30 June 2022 (2022-06-30)<br>see description, paragraphs [41]-[63] | 1, 3-4 |
| PX | JP 2023142606 A (TORAY INDUSTRIES) 05 October 2023 (2023-10-05)<br>see description, paragraphs [13]-[32] | 1, 3-6 |
| PX | WO 2024048235 A1 (NIPPON SHOKUBAI CO., LTD.; NATIONAL UNIVERSITY CORP. YOKOHAMA NATIONAL UNIVERSITY) 07 March 2024 (2024-03-07)<br>see description, paragraphs [14]-[51] | 1, 3-6 |
| A | WO 2020158719 A1 (NIPPON SHOKUBAI CO., LTD.) 06 August 2020 (2020-08-06)<br>see entire document | 1-12 |

☐ Further documents are listed in the continuation of Box C.  ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 December 2024** | **03 December 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/113883**

| Patent document cited in search report | | | Publication date (day/month/year) | Patent family member(s) | | | Publication date (day/month/year) |
|---|---|---|---|---|---|---|---|
| JP | 2020007574 | A | 16 January 2020 | JP | 7100514 | B2 | 13 July 2022 |
| WO | 2022138100 | A1 | 30 June 2022 | KR | 20230122582 | A | 22 August 2023 |
| | | | | JP | 2022098542 | A | 04 July 2022 |
| | | | | JP | 7110316 | B2 | 01 August 2022 |
| | | | | TW | 202229647 | A | 01 August 2022 |
| | | | | TWI | 829046 | B | 11 January 2024 |
| JP | 2023142606 | A | 05 October 2023 | None | | | |
| WO | 2024048235 | A1 | 07 March 2024 | None | | | |
| WO | 2020158719 | A1 | 06 August 2020 | JPWO | 2020158719 | A1 | 18 November 2021 |
| | | | | JP | 7148645 | B2 | 05 October 2022 |
| | | | | EP | 3919654 | A1 | 08 December 2021 |
| | | | | EP | 3919654 | A4 | 28 December 2022 |

Form PCT/ISA/210 (patent family annex) (July 2022)

**REFERENCES CITED IN THE DESCRIPTION**

**Patent documents cited in the description**

- CN 110869538 A
- JP 2020007574 A